(19) **Europäisches Patentamt**
**European Patent Office**
**Office européen des brevets**

(11) **EP 1 778 753 B1**

(12) **EUROPEAN PATENT SPECIFICATION**

(45) Date of publication and mention
of the grant of the patent:
**19.11.2008 Bulletin 2008/47**

(51) Int Cl.:
*C08F 253/00* (2006.01)     *C08F 8/06* (2006.01)
*C08F 8/34* (2006.01)     *C08F 291/02* (2006.01)
*C08F 279/02* (2006.01)     *C08L 17/00* (2006.01)
*C08C 19/04* (2006.01)     *C08C 19/20* (2006.01)

(21) Application number: **04763785.5**

(22) Date of filing: **04.08.2004**

(86) International application number:
**PCT/EP2004/008735**

(87) International publication number:
**WO 2006/012912 (09.02.2006 Gazette 2006/06)**

(54) **THERMOPLASTIC ELASTOMERIC MATERIAL AND PROCESS FOR ITS MANUFACTURING**

THERMOPLASTISCHES ELASTOMERES MATERIAL UND HERSTELLUNGSVERFAHREN DAFÜR

ÉLASTOMÈRE THERMOPLASTIQUE ET PROCESSUS DE FABRICATION

(84) Designated Contracting States:
**AT BE BG CH CY CZ DE DK EE ES FI FR GB GR HU IE IT LI LU MC NL PL PT RO SE SI SK TR**

(43) Date of publication of application:
**02.05.2007 Bulletin 2007/18**

(73) Proprietor: **Pirelli & C. S.p.A.**
**20123 Milano (IT)**

(72) Inventors:
• **COIAI, Serena**
**I-56010 Pontasserchio (IT)**
• **PASSAGLIA, Elisa**
**I-56121 Pisa (IT)**
• **HIREL, Catherine**
**30100 Grenoble (FR)**

• **CIARDELLI, Francesco**
**I-56125 Pisa (IT)**
• **TIRELLI, Diego**
**I-20126 Milano (IT)**
• **RESMINI, Emiliano**
**I-20126 Milano (IT)**
• **PERUZZOTTI, Franco**
**I-20126 Milano (IT)**

(74) Representative: **Giannesi, Pier Giovanni**
**Pirelli & C. S.p.A.**
**Viale Sarca, 222**
**20126 Milan (IT)**

(56) References cited:
WO-A-02/24795          GB-A- 2 022 105
US-A- 3 042 634          US-A1- 2003 013 815
US-B1- 6 262 175

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a process for manufacturing a thermoplastic elastomeric material, said process comprising a free radical polymerization of vinyl monomers in the presence of a vulcanized rubber in a subdivided form.

The increased production of industrial rubber products has resulted in the accumulation of large amounts of rubber wastes which are generally disposed in dedicated landfills with the main drawbacks of environment pollution as well as of the need for large dedicated areas for storing said wastes.

It is known in the art to depolymerize waste rubber, such as tyres, in an effort to reduce the volume of waste and obtain a useful byproduct. Likewise, rubber products may be devulcanized in an attempt to recycle the waste rubber.

In addition to these techniques, it is common in the art to grind the waste rubber and utilize the ground particles so obtained. These ground particles may then be compounded with thermoplastic polymeric materials in order to make final products which may be employed in a plurality of applications.

Said ground particles may be added to substantially thermoplastic polymers such as, for example, polypropylene or polystyrene, to improve their impact strength.

For example, the article of D. Tuchman and S. L. Rosen published in "Journal of Elastomers and Plastics", Vol. 10, pp. 115-128 (1978), discloses the addition of cryogenically ground tyre rubber to various thermoplastic polymers including polypropylene and polystyrene. In particular, with regard to polystyrene, the authors said that the cryogenically ground tyre rubber acts a moderately good impact enhancer when mechanically blended with polystyrene. A mechanical blend comprising 20% by weight of cryogenically ground tyre rubber produces a material mechanically comparable to a medium impact polystyrene. Moreover, the authors have investigated several techniques in order to graft styrene to the cryogenically ground tyre rubber. To this aim, different techniques were investigated such as, bulk graft, free radical graft and acid graft. The authors said that only an aqueous slurry process using a water-soluble initiator system was successful in giving a product having improved impact strength with respect to a product obtained by a straight mechanical blend.

US patent 3,042,63.4 discloses a process of making a rubber-resin product which comprises heating a mixture comprising comminuted rubber that has been vulcanized, water and resin-forming monomeric material selected from the group consisting of monoolefins such as, for example, styrene, α-methyl styrene, and acrylonitrile, and mixtures of such monoolefins, with material selected from the group consisting of butadiene and divinyl benzene, in an amount up to one-fourth the weight of said monoolefins, at a temperature of from 125°C to 250°C, until polymerization of said monomeric material, and recovering a dry-rubber resin product therefrom that may be masticated to give a uniform smooth rubber-resin blend. The abovementioned rubber-resin product is said to range from a stiffened rubbery product at the lower styrene monomer charge to a rigid brittle gum plastic at high styrene monomer charge.

Patent application GB 2,022,105 discloses a method of making plastic materials incorporating reclaimed tyre rubber which comprises swelling said reclaimed tyre rubber with a quantity of monomer which is insufficient to saturate said reclaimed tyre rubber and polymerizing the swollen mass. Monomers which may be conveniently used are selected from: vinyl aromatic compounds such as, for example, styrene, or substituted styrenes (for example, β-bromostyrene, chlorostyrene); acrylonitrile; divinyl benzene; or mixtures thereof. The obtained plastic materials are said to have good impact strength, tensile strength and elongation at break.

The article of M. Pittolo and R. P. Burford published in "Journal of Material Science", Vol. 21, pp. 1769-1774 (1986), discloses a study on rubber-crumb modified polystyrene. In particular, peroxide crosslinked polybutadiene and styrene/butadiene rubber powders were converted to semi-interpenetrating networks by swelling in styrene monomer and subsequent homopolymerization. Two initiator types were selected, one causing bonding between polystyrene and the rubber (benzoyl peroxide), the other allowing independent polymerization [azobis(isobutyro-nitrile)]. The polystyrene modified powders were then incorporated into a polystyrene matrix and the tensile properties of the resulting composites were determined. Improvements in performance over untreated crumb-modified composites were observed, with increased breaking strains due to crazing.

The article of M. Pittolo and R. P. Burford published in "Rubber Chemistry and Technology", Vol. 58, pp. 97-106 (1986), discloses the use of recycled rubber-crumb as thoughener of polystyrene. In particular, the rubber-crumb were treated with styrene monomer and benzoyl peroxide in order to graft the polystyrene on the rubber-crumb surface. The obtained modified rubber-crumb was then incorporated into a polystyrene matrix obtaining a composite material. The toughness of the obtained composite material is said to increase with increasing rubber-to-matrix adhesion and decreasing particle size of the rubber-crumb.

The paper "Free radical polymerization of vinyl monomers in the presence of ground tyre rubber" presented by S. Coiai et al. at the conference "Macromolecules 2003" held at Tirrenia (Pisa), Italy, on 6-16 October, 2003, discloses the possibility of providing some transfer groups onto the ground rubber surface in order to increase the grafted polymer content. No mention is made about the type of transfer groups which may be advantageously used.

The Applicant has faced the problem of improving the impact strength of thermoplastic elastomeric materials incorporating vulcanized ground rubber. In particular, the Applicant has faced the problem of improving the impact strength of thermoplastic elastomeric materials comprising a vulcanized ground rubber surface-grafted with at least one vinyl polymer.

The Applicant has now found that it is possible to improve said impact strength by increasing the amount of said surface-grafted vinyl polymer. The incresead amount of the surface-grafted vinyl polymer allows to obtain thermoplastic elastomeric materials showing an improved impact strength which may be directly used in order to make manufactured products. Moreover, said thermoplastic elastomeric materials may be used in blends with other polymeric materials, in particular with polymeric materials having the same kind of polymeric chains (e.g. vinyl polymer chains), in order to improve their impact strength.

According to a first aspect, the present invention relates to a process for manufacturing a thermoplastic elastomeric material said process comprising the following steps:

- surface treating a vulcanized rubber in a subdivided form in order to provide hydroxy and/or mercapto groups on its surface;
- grafting at least one vinyl monomer to said surface-treated vulcanized rubber in the presence of at least one free radical initiator so as to obtain a vinyl polymer grafted onto the surface of said vulcanized rubber in a subdivided form.

Preferably, said vinyl polymer is grafted onto the surface of said vulcanized rubber in a subdivided form in an amount not lower than 60% by weight, preferably not lower than 70% by weight, more preferably not lower than 80% by weight, with respect to the total weight of the surface-grafted vinyl polymer and the vulcanized rubber in a subdivided form.

Generally, the amount of said surface grafted vinyl polymer is not higher than 99.9% by weight, preferably not higher than 95% by weight, with respect to the weight of the thermoplastic elastomeric material after extraction of the ungrafted vinyl polymer.

The amount of the surface-grafted vinyl polymer may be determined by means of the following formula:

$$\% \text{ of surface grafted vinyl polymer} = \frac{(WGV)}{(WAE)} \times 100$$

wherein:

- WGV is the weight, expressed in grams (g), of the surface-grafted vinyl polymer;
- WAE is the weight, expressed in grams (g), of the obtained thermoplastic elastomeric material after extraction of the ungrafted vinyl polymer.

The weight of the surface-grafted vinyl polymer may be determined by means of gravimetric analysis by mass balance: further details about said analysis will be reported in the examples which follow.

The extraction of the ungrafted vinyl polymer may be carried out by means of processes known in the art such as, for example, by solvent extraction: further details about the extraction process will be reported in the examples which follow.

Preferably, the Degree of Grafting (DG) (%) of said vinyl polymer onto the surface of said vulcanized rubber in a subdivided form is not lower than 150%, preferably of from 160% to 600%, more preferably of from 180% to 800%.

The Degree of Grafting (DG) may be determined according to the article of M. Pittolo and R. P. Burford published in "Rubber Chemistry and Technology" above reported, by means of the following formula:

$$\% \text{ DG} = \frac{(WAE - WRS)}{(WRS)} \times 100$$

wherein:

- WAE is the weight, expressed in grams (g), of the obtained thermoplastic elastomeric material after extraction of the ungrafted vinyl polymer;
- WRS is the weight, expressed in grams (g), of the vulcanized rubber in a subdivided form in the obtained thermoplastic elastomeric material.

Further details about the determination of the Degree of Grafting will be reported in the examples which follow

According to one preferred embodiment, said vinyl polymer is grafted onto the surface of the vulcanized rubber in a subdivided form by means of a sulfur bridge (-S- bridge) .

Preferably, said vulcanized rubber in a subdivided form is surface-treated in order to provide mercapto groups on its surface.

Preferably, the grafting efficiency (Φ) of said vinyl polymer onto the surface of said vulcanized rubber is not lower than 40%, preferably of from 45% to 60%, more preferably of from 50% to 80%.

Said grafting efficiency (Φ) may determined by the means of the following formula:

$$(\Phi) = \frac{(WGV)}{(WTV)} \times 100$$

wherein:

- WGV is the weight, expressed in grams (g), of the surface-grafted vinyl polymer;
- WTV is the total weight, expressed in grams (g), of the vinyl polymer contained in the obtained
- thermoplastic elastomeric material.

For the aim of the present description and of the claims which follow, with the expression "the total weight of the vinyl polymer contained in the obtained thermoplastic elastomeric material" it is intended the sum between the weight of the surface-grafted vinyl polymer and the weight of the ungrafted vinyl polymer present in the obtained thermoplastic elastomeric material. Said weight may be determined by means of a gravimetric analysis by mass balance: further details about said analysis will be reported in the examples which follow.

For the purpose of the present description and of the claims which follow, except where otherwise indicated, all numbers expressing amounts, quantities, percentages, and so forth, are to be understood as being modified in all instances by the term "about". Also, all ranges include any combination of the maximum and minimum points disclosed and include any intermediate ranges therein, which may or may not be specifically enumerated herein.

The vulcanized rubber in a subdivided form which may be used in the present invention may be obtained by grinding or otherwise comminuting any source of vulcanized rubber compound such as, for example, tyres, roofing membranes, hoses, gaskets, and the like, and is preferably obtained from reclaimed or scrap tyres using any conventional method. For example, the vulcanized rubber in a subdivided form may be obtained by mechanical grinding at ambient temperature or in the presence of a cryogenic coolant (i.e. liquid nitrogen). Any steel or other metallic inclusions should be removed from the ground tyres before use. Usually, fibrous material such as, for example, tyre cord fibers, is preferably removed from the ground rubber using conventional separation methods.

According to one preferred embodiment, the vulcanized rubber in a subdivided form which may be used in the present invention, is in the form of powder or granules having a particle size not higher than 10 mm, preferably not higher than 5 mm.

According to a more preferred embodiment, the vulcanized rubber in a subdivided form which may be used in the present invention, has a particle size not higher than 0.5 mm, preferably not higher than 0.2 mm, more preferably not higher than 0.1 mm.

According to one preferred embodiment, the vulcanized rubber in a subdivided form may comprise at least one crosslinked diene elastomeric polymer or copolymer which may be of natural origin or may be obtained by solution polymerization, emulsion polymerization or gas-phase polymerization of one or more conjugated diolefins, optionally blended with at least one comonomer selected from monovinylarenes and/or polar comonomers in an amount of not more than 60% by weight.

The conjugated diolefins generally contain from 4 to 12, preferably from 4 to 8 carbon atoms, and may be selected, for example, from the group comprising: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof.

Monovinylarenes which may optionally be used as comonomers generally contain from 8 to 20, preferably from 8 to 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, the crosslinked diene elastomeric polymer or copolymer may be selected, for example, from: cis-1,4-polyisoprene (natural or synthetic, preferably natural rubber), 3,4-polyisoprene, polybutadiene (in particular polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

Alternatively, the vulcanized rubber in a subdivided form may further comprise at least one crosslinked elastomeric polymer of one or more monoolefins with an olefinic comonomer or derivatives thereof. The monoolefins may be selected, for example, from: ethylene and α-olefins generally containing from 3 to 12 carbon atoms such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from 4 to 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); polyisobutene; butyl rubbers; halobutyl rubbers, in particular chlorobutyl or bromobutyl rubbers; or mixtures thereof.

The surface-grafted vinyl polymer may be obtained by means of a free radical polymerization of vinyl monomers in the presence of a vulcanized rubber in a subdivided form. Preferably, said vinyl monomers may be selected, for example, from: alkyl vinyl monomers such as 2-hydroxyethyl (meth)acrylate, 2-hydroxypropyl (meth)acrylate, 2-ethylhexyl (meth)acrylate, butoxyethyl (meth) acrylate; cyclic vinyl monomers such as tetrahydrofurfuryl (meth)acrylate; linear or branched alkyl (meth)acrylates such as methyl (meth)acrylate, ethyl (meth)acrylate, butyl (meth)acrylate, octyl (meth) acrylate, decyl (meth)acrylate, tridecyl (meth)acrylate, stearyl (meth)acrylate, lauryl (meth)acrylate, isodecyl (meth)acrylate), n-hexyl (meth)-acrylate; cyclic (meth)acrylates such as cyclohexyl (meth)acrylate, isobornyl (meth)acrylate; ethoxylated alkyl (meth)acrylates such as methoxyethyl (meth)acrylate, ethoxyethyl (meth)acrylate, butoxyethyl (meth)acrylate, 2-(2-ethoxy)ethyl (meth)acrylate; dicyclopentenyl (meth)-acrylate; diethylene glycol (meth)acrylate; ethoxy-diethylene glycol (meth)acrylate; benzyl (meth)acrylate; polyethylene glycol(meth)acrylate; polypropylene glycol (meth)acrylate; methoxypolyethylene glycol (meth)acrylate; methoxypolypropylene glycol (meth)acrylate; 2-phenoxyethyl (meth) acrylate; phenoxypolyethylene glycol (meth)acrylate; alkylphenoxyethyl (meth)acrylate such as nonylphenoxyethyl (meth)acrylate; alkylphenoxypolyalkylene glycol (meth)acrylate; 2-hydroxy-3-phenyloxypropyl (meth)-acrylate; tetra-hydrofurfuryloxypropylalkylene glycol (meth)acrylate; dicyclopentenyloxypolyalkylene glycol (meth)acrylate; polyfluoroalkyl (meth)acrylate; or mixtures thereof; or from aromatic vinyl monomers such as styrene; o-methylstyrene; m-methylstyrene; p-methyl-styrene; 2,4-dimethylstyrene; ethylstyrene; p-t-butyl-styrene; α-methyl-styrene; α-methyl-p-methylstyrene; o-chlorostyrene; m-chlorostyrene; p-chlorostyrene; p-bromostyrene; 2-methyl-1,4-dichlorostyrene; 2,4-dibromo-styrene; vinylnaphthalene; or mixture thereof; or derivatives thereof including styrene momonomers containing copolymerizable monomer as a substituent such as, for example, acrylonitrile, maleic anhydride, methyl methacrylate, vinyl acetate, divinylbenzene, or mixtures thereof. Methyl (meth)acrylate or styrene monomers are preferred. Styrene is particularly preferred.

With regard to the process for manufacturing a thermoplastic elastomeric material, the step of providing hydroxy groups and/or mercapto groups on the surface of the vulcanized rubber in a subdivided form may be carried out in different ways.

For example, the step of surface treating a vulcanized rubber in a subdivided form in order to provide hydroxy groups on its surface, may be carried out by dispersing said vulcanized rubber in a subdivided form in a mixture comprising water and an organic solvent with at least one oxidizing agent.

Preferably, the organic solvent may be selected, for example, from: ketones such as acetone; alcohols such as ethanol, methanol; ethers such as tetrahydrofurane, dioxane; or mixtures thereof. Acetone aqueous solution (10% acetone/90% water) is particularly preferred.

Preferably, the oxidizing agent may be selected, for example from: potassium permanganate, hydrogen peroxide, osmium tetraoxide, hydrogen peroxide/urea complex, sodium percarbonate, sodium perchlorate, sodium perborate, potassium peroxymonosulfate, potassium permanganate/potassium periodate aqueous solution, or mixtures thereof. Potassium permanganate is particularly preferred.

Preferably, said surface treating step may be carried out at a temperature of from -15°C to 50°C, more preferably of from 0°C to 30°C, for a time of from 1 hour to 48 hours, more preferably of from 18 hours to 30 hours.

Preferably, the oxidizing agent is used in an amount of from 1% by weight to 50% by weight, preferably of from 10% by weight to 25% by weight, with respect to the total weight of the vulcanized rubber in a subdivided form.

The step of surface treating a vulcanized rubber in a subdivided form in order to provide mercapto groups on its surface may be carried out as follows.

For example, the vulcanized rubber surface-treated as above disclosed in order to provide hydroxy groups on its surface, may be reacted with at least one silane coupling agent in order to provide mercapto groups on its surface.

Preferably, the silane coupling agent may be selected, for example, from compounds having the following structural formula (I):

$$(R)_3Si-C_nH_{2n}-SH \qquad (I)$$

wherein the groups R, which may be identical or different, are selected from: alkyl, alkoxy or aryloxy groups or from halogen atoms, on condition that at least one of the groups R is an alkoxy or aryloxy group; n is an integer of from 1 to 6 inclusive.

Preferably, the coupling agents may be selected, for example, from: (3-mercaptopropyl)trimetoxysilane, (3-mercaptopropyl)dimetoxymethylsilane, (3-mercaptopropyl)-trietoxysilane, (3-mercaptopropyl) dietoxymethylsilane, (3-mercaptopropyl)metoxydimethylsilane, (4-mercaptobutyl)-trimetoxysilane, (4-mercaptobutyl)dietoxymethylsilane, or mixtures thereof. (3-Mercaptopropyl)trimetoxysilane is particularly preferred.

Preferably, the reaction with at least one coupling agent may be carried out at a temperature of from -10°C to 150°C, more preferably of from 80°C to 100°C, for a time of from 1 hour to 48 hours, more preferably of from 18 hours to 30 hours.

Preferably, the coupling agent is used in an amount of from 0.01% by weight to 10% by weight, preferably of from 0.8% by weight to 2% by weight, with respect to the total weight of the surface-treated vulcanized rubber.

Alternatively, the mercapto groups may be provided on the surface of the vulcanized rubber in a subdivided form by reacting the same with at least one thio-acid having the following structural formula (II):

$$R_1-C(=O)-SH \qquad (II)$$

wherein $R_1$ is selected from alkyl, aryl, alkylaryl or arylakyl groups, in the presence of at least one free radical initiator.

Preferably, the thio-acid may be selected, for example, from: thioacetic acid, thiopropionic acid, thiobenzoic acid, or mixtures thereof. Thioacetic acid is particularly preferred.

Preferably, the thio-acid is used in an amount of from 0.01% by weight to 3% by weight, preferably of from 0.1% by weight to 1% by weight, with respect to the total weight of the vulcanized rubber in a subdivided form.

Preferably, the free radical initiator may be selected from azo compounds having the following structural formula (III):

$$R_2-N=N-R_3 \qquad (III)$$

wherein $R_2$ and $R_3$, which may be identical or different, may be selected from organic groups such as, for example, aliphatic, cycloaliphatic, or aromatic groups; or linear or cyclic nitrile derivatives.

Preferably, the free radical initiator may be selected, for example, from: 1,1'-azobis(cyclohexane-carbonitrile), azodicarbonamide, 2,2'-azobis(2,4-dimethyl-pentenenitrile), 2,2'-azobis(2-ethylpropanimide-amide)•2HCl, 2,2'-azobis (isobutyronitrile), 2,2'-azobis(2-methylbutanenitrile), 4,4'-azobis(4-cyanopentanoic acid), 2,2'-azobis(2-acetoxypropane), 2-(t-butylazo)-4-methoxy-2,4-dimethylpentanenitrile, 2-(t-butylazo)-2,4-dimethyl-pentanenitrile, 4-(t-butylazo)-4-cyanopentanoic acid, 2-(t-butylazo)isobutyronitrile, 2-(t-butylazo)-2-methyl-butanenitrile, 1-(t-amylazo)cyclohexanecarbonitrile, 1-(t-butylazo)cyclohexanecarbonitrile, 1-(t-butylazo)formamide, or mixtures thereof. 2,2'-Azobis(isobutyronitrile) is particularly preferred.

Preferably, the free radical initiator is used in an amount of from 0.001% by weight to 10% by weight, preferably of from 0.005% by weight to 5% by weight, with respect to the total weight of the vulcanized rubber in a subdivided form.

Preferably, the reaction with at least one thio-acid and at least one free radical initiator may be carried out at a temperature of from 0°C to 150°C, more preferably of from 30°C to 90°C, for a time of from 1 hour to 75 hours, more preferably of from 30 hours to 50 hours.

According to one preferred embodiment, the vinyl monomer which may be advantageously used in the process according to the present invention, may be selected from the vinyl monomers above reported.

According to one preferred embodiment, the vinyl monomer is used in an amount of from 0.1% by weight to 99% by weight, preferably of from 0.5% by weight to 90% by weight, with respect to the total weight of the surface-treated vulcanized rubber in a subdivided form and the vinyl monomer.

According to one preferred embodiment, the free radical initiator which may be advantageously used in the grafting step of the process according to the present invention, may be selected, for example, from: peroxide compounds, azo compounds, or mixtures thereof. Peroxide compounds are particularly preferred.

Specific examples of peroxide compounds which may be advantageously used are: dibenzoyl peroxide, t-butyl hydroperoxide, di-t-butyl peroxide, bis(2,4-dichlorobenzoyl)peroxide, bis-(4-chlorobenzoyl)peroxide, 1,1-dit-butylperoxy-3,5,5-trimethylcycloexane, 2,2-di-t-butyl-peroxybutane, t-butylperoxybenzoate, n-butyl-4,4-di-t-butylperoxyvalerate, 2,5-dimethyl-2,5-di-t-butylperoxy-hexane, dicumyl peroxide, bis(t-butylperoxyisopropyl)-benzene, 3,3,6,6,9-hexamethyl-1,2,4,5-tetraoxacyclononane, 2,5-dimethyl-2,5-di-t-butylperoxy-hexyne-3, t-butylcumyl peroxide, ethyl-3,3-di-(t-butylperoxy)butyrate, t-butyl- peroxy-3,3,5-trimethylhexanoate, bis-(4-methylbenzoyl)-peroxide, or mixtures thereof. Dibenzoyl peroxide is particularly preferred.

Specific examples of azo compounds which may be advantageously used have been already disclosed above.

According to one preferred embodiment, the free radical initiator is used in an amount of from 0.001% by moles to 5% by moles, preferably of from 0.01% by moles to 2% by moles, with respect to the total moles of vinyl monomer.

According to one preferred embodiment, said grafting step may be carried out at a temperature of from 0°C to 150°C, more preferably of from 50°C to 95°C, for a time of from 1 hour to 48 hours, more preferably of from 15 hours to 30 hours.

Preferably, in order to improve the absorption of the vinyl monomer on the surface-treated vulcanized rubber in a subdivided form, the vinyl monomer may be dissolved in an inert solvent. Preferably, said inert solvent may be selected from: aromatic hydrocarbons (for example, benzene, toluene, ethylbenzene, xylene), alicyclic hydrocarbon (for example, cyclohexane), aliphatic hydrocarbons (for example, hexane, octane), ketones (for example, methyl ethyl ketone), esters (for example, ethyl acetate), ethers (for example, 1,4-dioxane), or mixtures thereof.

The solvent may be used in an amount of from 0% by weight to 30% by weight, preferably of from 5% by weight to 20% by weight, with respect to the total weight of the vinyl monomer.

Said grafting step may be carried out by conventional method such as, for example, bulk polymerization, solution polymerization, suspension polymerization, emulsion polymerization, bulk-suspension polymerization.

Particularly preferred, is a bulk polymerization or a bulk-suspension polymerization wherein a surface-treated vulcanized rubber in a subdivided form dissolved in a vinyl monomer is bulk-polymerized and then, if necessary, suspension-polymerized. The polymerization may be initiated, for example, by heating the system or by irradiating the system with light or radiations.

In the bulk-polymerization method which is advantageous in industrial manufacturing process, an inert solvent may be added. Inert solvents which may be advantageously used have been already disclosed above.

Said grafting step may be carried out under atmosferic pressure or under applied pressure, in an atmosphere of an inert gas such as, for example, nitrogen, helium, argon, preferably under a stream of an inert gas, more preferably under a nitrogen stream.

Generally, said grafting step is continued until the conversion of the vinyl monomer reaches 20% to 100%, preferably 25% to 90%.

Said grafting step may be carried out in any system known in the art such as, for example, a batch system, a semi-batch system or a continuous system. For example, the polymerization may be carried out according to a continuous polymerization method such as, for example, a multistage bath continuous polymerization method, a multistage column continuous polymerization method, or a combination thereof.

After completion of said grafting step, the obtained thermoplastic elastomeric material may be recovered in accordance with any methods known in the art such as, for example, by removing the unreacted monomer, the homopolymer, and the diluent solvent optionally present, by solvent extraction, or by heating under reduced pressure, or by extrusion by means of an extruder designed so as to remove volatile matter. Subsequently, the so obtained thermoplastic elastomeric material may be pelletized or powdered as needed.

Alternatively, the obtained thermoplastic elastomeric material may be recovered by a method such as separation by filtration or centrifugation, washed with water or with inert solvents, dried and subsequently pelletized or powdered as needed.

The pellets or powders may be either packaged for future use or used immediately in a process of forming a manufactured product.

As already reported above, the pellets or powders may be directly formed into manufactured products according to techniques known in the art for thermal processing of thermoplastic resin compositions. For example, compression molding, vacuum molding, injection molding, calendering, casting, extrusion, filament winding, laminating, rotational or slush molding, transfer molding, lay-up or contact molding, stamping, or combinations of these methods, may be used.

Alternatively, as already reported above, the obtained pellets or powder may be added as interface compatibilizing agent to other polymers, preferably to polymers having the same kind of polymeric chains. For example, the obtained thermoplastic elastomeric material in pellets or powder form, may be melt-mixed with polystyrene to be used as a polymer blend, or may be mixed or melt-mixed with a polymer other than polystyrene, said polymer being selected, for example, from: styrene-butadiene rubbers, polyphenylene ether resins, polycarbonates, polyesters, to be used as a polymer blend.

Therefore, according to a further aspect, the present invention also relates to the use of a thermoplastic elastomeric material according to the present invention in blends with other polymers.

To the obtained thermoplastic elastomeric material conventional additives such as stabilizers [for example, antioxidants (phenolic antioxidants, phosphoric antioxidants), ultraviolet ray absorber (thermostabilizers], flame-retardants, lubricants (for example, zinc stearate, calcium stearate, ethylene-bis-stearylamide), mold lubricants or parting agents, antistatic agents, fillers, colorants (for example, titanium oxide, red iron oxide, azo compounds, perylene, phthalocyanine, heterocyclic-series compounds), plasticizers and spreading agents (for example, polyethylene glycol, mineral oil), surface-modifying agents, or mixtures thereof, may be added.

According to a further aspect, the present invention also relates to a manufactured product comprising the thermoplastic elastomeric material above disclosed.

Said thermoplastic elastomeric material may be molded in sheet form and structural form designed and adaptable as packaging structures, housings, support structures, furnitures, molded articles, toys, architectural trims, and the like.

Moreover, said thermoplastic elastomeric material may also be used in order to make, for example, belts such as, conveyor belts, power belts or driving belts; flooring and footpaths which may be used for recreational area, for industrial area, for sport or safety surfaces; flooring tiles; mats such as, anti-static computer mats, automotive floor mats; mounting pads; shock absorbers sheetings; sound barriers; membrane protections; carpet underlay; automotive bumpers; wheel arch liner; seals such as, automotive door or window seals; o-rings; gaskets; watering systems; pipes or hoses materials; flower pots; building blocks; roofing materials; and the like.

The present invention will be further illustrated below by means of a number of preparation examples, which are given for purely indicative purposes and without any limitation of this invention.

EXAMPLE 1

Preparation of surface-treated vulcanized rubber in a subdivided form (hydroxy groups)

A vulcanized rubber (cryogenically ground waste rubber from scrap tyres (having an average diameter <0.1 mm (140 mesh) - Applied Cryogenics International AG) was extracted with boiling acetone in order to remove plasticizers, accelerators and other additives usually present in the vulcanized rubber obtained from scrap tyres and was subsequently dried under vacuum until constant weight.

10 g of the obtained vulcanized rubber and 50 ml of an $H_2O$/acetone solution (9/1 in volume), were added into a 500 ml flask. The mixture was stirred, at room temperature, for 12 hours.

Afterward, 200 ml of an aqueous solution of potassium permanganate ($KMnO_4$ - 10% by weight in distilled water) were added dropwise and the mixture was stirred, at room temperature, for 24 hours. After 24 hours the purple colour of the potassium permanganate disappeared indicating the completion of the reaction.

The formed by-product, manganese dioxide ($MnO_2$), was further oxidized by adding 10 ml (2 ml each time) of a hydrogen peroxide solution (30% in volume) with 1% in volume of suplhuric acid. The obtained solid product was then filtered and washed with water, then with acetone and finally with diethyl ether, until the filtrate was neutral. Subsequently, the solid product was dried under vacuum until constant weight: a vulcanized rubber with hydroxy groups on its surface was obtained.

EXAMPLE 2

Preparation of surface-treated vulcanized rubber in a subdivided form (mercapto groups)

2 g of the oxidized rubber obtained as disclosed in Example 1 and 100 ml of toluene were added into a 250 ml flask and the mixture was stirred, at room temperature, for 12 hours. Subsequently, 1.3 ml of 3-mercaptopropyltrimethoxysilane (Sigma-Aldrich) was added and the mixture was stirred, at 95°C, for 24 hours.

Then, the mixture was centrifugated and the obtained solid product was washed with toluene, then with acetone, then with diethyl ether and finally with pentane. Subsequently, the solid product was dried under vacuum until constant weight: a vulcanized rubber with mercapto groups on its surface was obtained.

EXAMPLE 3

Reparation of surface-treated vulcanized rubber in a subdivided form (mercapto groups)

5 g of vulcanized rubber (cryogenically ground waste rubber from scrap tyres (<0.1 mm (140 mesh) - Applied Cryogenics International AG) which was extracted as disclosed in Example 1 and 100 ml of toluene were added into a 500 ml flask. The mixture was stirred, at room temperature, for 12 hours.

Subsequently, 1.5 ml of thioacetic acid (Sigma-Aldrich) and 0.035 g of 2,2'-azobis(isobutyronitrile) (Sigma-Aldrich), were added. The mixture was heated to 75°C and was maintained at said temperature, under stirring, for 48 hours.

Then, the mixture was centrifugated and the obtained solid product was washed with toluene, then with methanol and was subsequently dried under vacuum until constant weight.

30 ml of toluene were then added to the dried solid product (0.65 g) and the mixture was stirred, at room temperature, for 12 hours. Subsequently, 15 ml of a sodium hydroxide solution (1% in methanol), were added slowly and the mixture was stirred, at room temperature, for 3 hours. Then, 5 ml of a hydrochloric acid solution (1M solution) were added and the stirring, at room temperature, was continued for 30 minutes.

The obtained solid product was washed with water, filtered, washed with methanol, and finally dried until constant weight: a vulcanized rubber with mercapto groups on its surface was obtained.

EXAMPLES 4 -7

Preparation of the thermoplastic material comprising an elastomeric phase

The surface-treated vulcanized rubbers obtained as disclosed in Examples 1 and 2 were used.

For comparative purposes, a vulcanized rubber in a subdivided form as such (namely, not surface-treated), was extracted as disclosed in Example 1.

0.5 g of vulcanized rubber were added to a 50 ml glass tube under nitrogen stream and a solution of 9.5 g of styrene with dibenzoyl peroxide (the amount of dibenzoyl peroxide are given in Table 1 and is expressed as % by moles with respect to the total moles of the vinyl monomer) was then added. The mixture was stirred, at 85°C, for 24 hours.

The obtained thermoplastic elastomeric material was suspended in chloroform, precipitated in methanol and dried under vacuum until constant weight.

The grafting efficiency (Φ) of the styrene was determined as follows.

A sample of 1 g of the obtained thermoplastic elastomeric material was extracted in boiling chloroform for 8 hours in order to extract the ungrafted polystyrene. After the extraction, the thermoplastic elastomeric material was dried under vacuum until constant weight and conditioned at room temperature before weighting. The difference between the weight of the sample before the extraction and the weight of the sample after the extraction corresponds to the weight of the ungrafted polystyrene.

The grafting efficiency (Φ) was determined by means of the following formula:

$$(\Phi) = \frac{(WGV)}{(WTV)} \times 100$$

wherein:

- WGV is the weight, expressed in grams (g), of the surface-grafted polystyrene;
- WTV is the total weight, expressed in grams (g), of the polystyrene contained in the obtained thermoplastic elastomeric material.

The weight of the surface-grafted polystyrene (WGV) corresponds to the difference between the total weight of the polystyrene (WTV) and the weight of the ungrafted polystyrene which was determined as reported above.

The total weight of polystyrene (WTV), which corresponds to the sum between the weight of the surface-grafted polystyrene and the weight of the ungrafted polystyrene contained in the obtained thermoplastic elastomeric material, was determined by means of a gravimetric analysis by a mass balance. To this purpose the thermoplastic elastomeric material obtained as disclosed above, was suspended in chloroform, precipitated in methanol and dried under vacuum until constant weight and was weighted: the difference between the so obtained weight and the weight of the starting vulcanized rubber in a subdivided form used in order to obtain the corresponding thermoplastic elastomeric material, corresponds to the total weigth of the polystyrene (WTV).

The Degree of Grafting (% DG) was determined by means of the following formula:

$$\% \, DG = \frac{(WAE - WRS)}{(WRS)} \times 100$$

wherein:

- WAE is the weight, expressed in grams (g), of the obtained thermoplastic elastomeric material after extraction of the ungrafted polystytrene;
- WRS is the weight, expressed in grams (g), of the vulcanized rubber in a subdivided form in the obtained thermoplastic elastomeric material.

The amount of the surface-grafted vinyl polymer was determined by means of the following formula:

$$\% \text{ of surface grafted vinyl polymer} = \frac{(WGV)}{(WAE)} \times 100$$

wherein:

- WGV is the weight, expressed in grams (g), of the surface-grafted polystyrene;
- WAE is the weight, expressed in grams (g), of the obtained thermoplastic elastomeric material after extraction of the ungrafted polystyrene.

The obtained data are given in Table 1.

EXAMPLE 8

Preparation of the thermoplastic material comprising an elastomeric phase

The surface-treated vulcanized rubber obtained as disclosed in Example 3 was used.
The preparation was carried out as disclosed in Example 1 the only difference being the amount of vulacnized rubber and of the styrene used. To this purpose, 0.3 g of vulcanized rubber were added to a 50 ml glass tube under nitrogen stream and a solution of 9.7 g of styrene with dibenzoyl peroxide (the amount of dibenzoyl peroxide are given in Table 1 and is expressed as % by moles with respect to the total moles of the vinyl monomer) was then added.
The data reported in Table 1 were obtained as disclosed in Example 1.

TABLE 1

| EXAMPLE | DIBENZOYL PEROXIDE (% BY MOLES) | TOTAL WEIGHT OF POLYSTYRENE (g) | WEIGHT OF UNGRAFTED POLYSTYRENE HOMOPOLYMER (g) | GRAFTING EFFICIENCY ($\Phi$) | DEGREE OF GRAFTING (% DG) | AMOUNT OF GRAFTED POLYSTYRENE (%) |
|---|---|---|---|---|---|---|
| 4 (*) | 1 | 0.83 | 0.54 | 35.0 | 58 | 36.7 |
| 5 (*) | 2 | 0.68 | 0.48 | 29.0 | 40 | 28.6 |
| 6 | 1 | 1.61 | 0.84 | 48.0 | 154 | 60.7 |
| 7 | 1 | 3.91 | 1.72 | 56.0 | 438 | 81.4 |
| 8 | 2 | 1.12 | 0.55 | 51.0 | 190 | 65.5 |

(*): comparative.

Example 4: vulcanized rubber (cryogenically ground waste rubber from scrap tyres (average diameter <0.1 mm (140 mesh) - Applied Cryogenics International AG);

Example 5: vulcanized rubber (cryogenically ground waste rubber from scrap tyres (average diameter <0.1 mm (140 mesh) - Applied Cryogenics International AG);

Example 6: surface-treated vulcanized rubber from Example 1;

Example 7: surface-treated vulcanized rubber from Example 2;

Example 8: surface-treated vulcanized rubber from Example 3.

**Claims**

1. Process for manufacturing a thermoplastic elastomeric material, said process comprising the following steps:

   - surface treating a vulcanized rubber in a subdivided form in order to provide hydroxy and/or mercapto groups on its surface;
   - grafting at least one vinyl monomer to said surface-treated vulcanized rubber in the presence of at least one free radical initiator so as to obtain a vinyl polymer grafted onto the surface of said vulcanized rubber in a subdivided form.

2. Process for manufacturing a thermoplastic elastomeric material according to claim 1, wherein said vulcanized rubber in as subdivides form is surface treated in order to provide mercapto groups on its surface,

3. Process for manufacturing a thermoplastic elastomeric material according to claim 1 or 2, wherein the grafting efficiency (Φ) of said vinyl polymer onto the surface of said vulcanized rubber is not lower than 40%.

4. Process for manufacturing a thermoplastic elastomeric material according to claim 3, wherein the grafting efficiency (Φ) of said vinyl polymer onto the surface of said vulcanized rubber is of from 45% to 60%.

5. Process for manufacturing a thermoplastic elastomeric material according to claim 3, wherein the grafting ef f iciency (Φ) of said vinyl polymer onto the surface of said vulcanized rubber is of from 50% to 80%,

6. Process for manufacturing a thermoplastic elastomeric material according to any one of claims 1 to 5, wherein the vulcanized rubber in a subdivided form is in the form of powders or granules having a particle size not higher than 10 mm.

7. Process for manufacturing a thermoplastic elastomeric material according to any one of claims 1 to 5, wherein the vulcanized rubber in a subdivided form is in the form of powder or granules having a particle size not higher than 0.3 mm.

8. Process for manufacturing a thermoplastic elastomeric material according to claim 7, wherein the vulcanized rubber in a subdivided form is in the form of powder or granules having a article size not higher than 0.2 mm.

9. Process for manufacturing a thermoplastic elastomeric material according to claim 8, wherein the vulcanized rubber in a subdivided form is in the form of powder or granules having a particle size not higher than 0.1 mm.

10. Process for manufacturing a thermoplastic elastomeric material according to any one of the preceding claims, wherein the vulcanized rubber in a subdivided form comprises at least one crosslinked diene elastomeric polymer or copolymer of natural origin or obtained by solution polymerization, emulsion polymerization or gas-phase polymerization, of one or more conjugated diolefins, optionally blended with at least one comonomer selected from monovinylarenes and/or polar comonomers in an amount of not more than 60% by weight.

11. Process for manufacturing a thermoplastic elastomeric material according to claim 10, wherein the crosslinked diene elastomeric polymer or copolymer is selected from: cis-1,4-polyisoprene, 3,4-polyisoprene, polybutadiene, optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

12. Process for manufacturing a thermoplastic elastomeric materials according to any one of the preceding claims, wherein the vulcanized rubber in a subdivided form further comprises at least one crosslinked elastomeric polymer of one or more monoolefins with an olefinic comonomer or derivatives thereof.

13. Process for manufacturing a thermoplastic elastomeric material according to claim 12, wherein the crosslinked elastomeric polymer is selected from: ethylene/propylene copolymers (EPR) or ethylene/propylene/diene copolymers (EPDM); polyisobutene; butyl rubbers; halobutyl rubbers, in particular chlorobutyl or bromobutyl rubbers, or mixture thereof.

14. Process for manufacturing a thermoplastic elastomeric material according to any one of the preceding claims, wherein the step of surface treating a vulcanized rubber in a subdivided form in order to provide hydroxy groups on its surface is carried out by dispersing said vulcanized rubber in a subdivided form in a mixture comprising water and an organic solvent with at least one oxidizing agent.

15. Process for manufacturing a thermoplastic elastomeric material according to claim 14, wherein the organic solvent is selected from: ketones such as acetone; alcohols such as ethanol, methanol; others such as tetrahydrofurane, dioxane; or mixtures thereof.

16. Process for manufacturing a thermoplastic elastomeric materials according to claims 14 or 15, wherein the oxidizing agent is selected from: potassium permanganate, hydrogen peroxide, osmium tetraoxide, hydrogen peroxide/urea complex, sodium percarbonate, sodium perchlorate, sodium perborate, potassium peroxymonosulfate, potassium permanganate/potassium periodate aqueous solution, or mixtures thereof.

17. Process for manufacturing a thermoplastic elastomeric material according to any one of claims 14 to 16, wherein said surface treating step is carried out at a temperature of from -15°C to 50°C.

18. Process for manufacturing a thermoplastic elastomeric material according to any one of claims 14 to 17, wherein said surface treating step is carried out for a time of from 1 hour to 48 hours.

19. Process for manufacturing a thermoplastic elastomeric material according to any one of claims 14 to 18. wherein the oxidizing agent is used in an amount of from 1% by weight to 50% by weight with respect to the total weight of the vulcanized rubber in a subdivided form.

20. Process for manufacturing a thermoplastic elastomeric material according to any one of the preceding claims, wherein the surface treating step is carrier out by reacting the surface treated vulcanized rubber in a subdivided form obtained according to any one of claims 14 to 19 with at least one silane coupling agent in order to provide mercapto groups on its surface.

21. Process for manufacturing a thermoplastic elastomeric material according to claim 20, wherein the silane coupling agent is selected from compounds having the following structural formula (I):

$$(R)_3Si-C_nH_{3n}-9H \qquad (I)$$

wherein the groups R, which may be identical or different, are selected from: alkyl, alkoxy or aryloxy groups or from halogen atome, on condition that at least one of the groups R is an alkoxy or aryloxy group, n is an integer of from 1 to 6 inclusive.

22. Process for manufacturing a thermoplastic elastomeric material according to claim 20 or 21, wherein the reaction with at least one coupling agent le carried out at a temperature of from -10°C to 150°C.

23. process for manufacturing a thermoplastic elastomeric materials according to any one of claims 20 to 22, wherein the reaction with at least one coupling agent is carried out for a time of from 1 hour to 48 hours.

24. process for manufacturing a thermoplastic elastomeric materials according to any one of claims 20 to 23, wherein the coupling agent is used in an amount of from 0.01% by weight to 10% by weight with respect to the total weight of the surface-treated vulcanized rubber.

25. Process for manufacturing a thermoplastic elastomeric materials, according to any one of claims 1 to 13, wherein the step of surface treating a vulcanized rubber in a subdivided form in order to provide mercapto groups on its surface is carried out by reacting the same with at least one thio-acid having the following structural formula (II):

$$R_1-C(=O)-SH \qquad (II)$$

wherein $R_1$ is selected from alkyl, aryl, alkylaryl or arylakyl groups, in the presence of at least one free radial initiator.

26. Procese for manufacturing a thermoplastic elastomeric material according to claim 25, wherein the thio-acid is used in an amount of from 0.01% by weight to 3% by weight with respect to the total weight of the vulcanized rubber in a subdivided form.

27. Process for manufacturing a thermoplastic elastomeric material according to claims 25 or 26, wherein the free radical initiator is selected from azo compounds having the following structural formula (III):

$$R_2\text{-N-N-}R_3 \qquad (III)$$

wherein $R_2$ and $R_3$, which may be identical or different, may be selected from organic groups such as aliphatic, cycloaliphatic, or aromatic groups; or linear or cyclic nitrile derivatives.

28. Process for manufacturing a thermoplastic elastomeric material according to any one of claims 25 to 27, wherein the free radical initiator ia used in an amount of from 0.001% by weight to 10% by weight with respect to the total weight of the vulcanized rubber in a subdivided form.

29. Process for manufacturing a thermoplastic elastomeric material according to any one of claims 25 to 26, wherein the reaction with at least one thio-acid and at least one free radical initiator is carried out at a temperature of from 0°C to 150°C.

30. Process for manufacturing a thermoplastic elastomeric material according to any one of claims 25 to 29, wherein the reaction with at least one thio-acid and at least one free radical initiator is carried out for a time of from 1 hour to 75 hours.

31. Process for manufacturing a thermoplastic elastomeric material according to any one of the preceding claims, Wherein the vinyl monomer in selected from: alkyl vinyl monomers such as 2-hydroxyethyl (meth) acrylate, 2-hydroxypropyl (meth) acrylate, 2-ethylhexyl (meth) acrylate, butoxyethyl (math) acrylate, cyclic vinyl monomers such as tetrahydrofurfuryl (meth)acrylate; linear or branched alkyl (meth) acrylates such as methyl (meth) acrylate. ethyl (meth) acrylate, butyl (meth)-acrylate, octyl (meth) acrylate, decyl (meth)acrylate, tridecyl (meth) acrylate, stearyl (meth)acrylate, lauryl (meth) acrylate, isodecyl (meth) acrylate), n-hexyl (meth)- acrylate; cyclic (meth) acrylates such as cyclohexyl (meth)acrylate, isobornyl (meth) acrylate; ethoxylated alkyl (meth) acrylates much as methoxyethyl (meth)acrylate, ethoxyethyl (meth) acrylate, butoxyethyl (meth)acrylate, 2-(2-ethoxy) ethyl (meth) acrylate; dicyclopentenyl (meth)-acrylate; diethylene glycol (meth) acrylate; ethoxy-diethylene glycol (meth) acrylate; benzyl (meth) acrylate; polyethylene glycol (meth) acrylate; polypropylene glycol (meth) acrylate; methoxypolyethylene glycol (meth) acrylate; methoxypolypropylene glycol (meth) acrylate; 2-phenoxyethyl (meth) acrylate, phenoxypolyethylene glycol (meth) acrylate, alkyl-phenoxyethyl (meth) acrylate such as nonylphenoxyethyl (meth) acrylate; alkylphenoxypolyalkylene glycol (meth) acrylate; 2-hydroxy-3-phenyloxypropyl (meth) acrylate; tetra-hydrofurfuryloxypropylalkylene glycol (meth) acrylate; dicyclopentenyloxypolypolyalkylene glycol (meth)acrylater polyfluoroalkyl (meth)acrylate; or mixtures thereof; or from aromatic vinyl monomers such as styrene; o-methylstyrene; m-methyl-styrene; p-methyl-styrene; 2,4-dimethylstyrene; ethylstyrene; p-t-butyl-styrene; $\alpha$-methyl-styrene; $\alpha$-methyl-p-methylstyrene; o-chlorostyrene; m-chlorostyrene; p-chlorostyrene; p-bromostyrene; 2-methyl-1,4-dichlorostyrene; 2,4-dibromo-styrene; vinylnaphthalene; or mixture thereof; or derivatives thereof including styrene momonomers containing copolymerizable monomer as a substituent such as, for examples, acrylonitrile, maleic anhydride, methyl methacrylate, vinyl acetate, divinylbenzene, or mixture thereof.

32. Process for manufacturing a thermoplastic elastomeric material according to claim 31, wherein said vinyl monomer is selected from methyl (meth)acrylate and styrene monomers.

33. Process for manufacturing a thermoplastic elastomeric material according to claim 32, wherein said vinyl monomer in styrene .

34. Process for manufacturing a thermoplastic elastomeric material according to any one of the preceding claims, wherein the vinyl monomer is used in an amount of from 0.1% by weight to 99% by weight with respect to the total weight of the surface-treated vulcanized rubber in a subdivided form and the vinyl monomer.

35. Process for manufacturing a thermoplastic elastomeric material according to any one of the preceding claims, wherein the grafting step is carried out in the presence of at least one free radical initiator selected from: peroxide compounds, azo compounds, or mixtures thereof.

36. Process for manufacturing a thermoplastic elastomeric material according to claim 35, wherein the free radical initiator is used in an amount of from 0.001% by moles to 5% by moles with respect to the total moles of vinyl monomer.

37. Process for manufacturing a thermoplastic elastomeric material according to any one of the preceding claims, wherein said grafting step is carried out at a temperature of from 0°C to 158°C.

38. Process for manufacturing a thermoplastic elastomeric material according to any one of the preceding claims, wherein said grafting step is carried out for a time of from 1 hour to 48 hours.

39. Process for manufacturing a thermoplastic elastomeric material according to any one of the preceding claims, wherein the vinyl monomer is dissolved in an inert solvent selected from: aromatic hydrocarbons, alicyclic hydrocarbon, aliphatic hydrocarbons, ketones, esters, ethers, or mixtures thereof.

40. Process for manufacturing a thermoplastic elastomeric material according to claim 39, wherein said inert solvent is used in an amount of from 0% by weight to 30% by weight with respect to the total weight of the vinyl monomer.

41. Process for manufacturing a thermoplastic elastomeric material according to any one of the preceding claims, wherein said vinyl polymer is grafted onto the surface of said vulcanized rubber in a subdivided form in an amount not lower than 60% by weight with respect to the total weight of the surface-grafted vinyl polymer and the vulcanized rubber in a subdivided form.

42. Process for manufacturing a thermoplastic elastomeric material according to claim 41, wherein said vinyl polymer is grafted onto the surface of said vulcanized rubber in a subdivided form in an amount not lower than 70% by weight with respect to the total weight of the surface-grafted vinyl polymer and the vulcanized rubber in a subdivided form.

43. Process for manufacturing a thermoplastic elastomeric material according to claim 42, wherein said vinyl polymer is grafted onto the surface of said vulcanized rubber in a subdivided form in an amount not lower than 80% by weight with respect to the total weight of the surface-grafted vinyl polymer and the vulcanized rubber in a subdivided form.

44. Process for manufacturing a thermoplastic elastomeric material according to any one of the preceding claims, wherein the Degree of Grafting (% DG) or said vinyl polymer onto the surface of sand vulcanized rubber in a subdivided form is not lower than 150%.

45. Process for manufacturing a thermoplastic elastomeric material according to claim 44, wherein the Degree of Grafting (% DG) of said vinyl polymer onto the surface of said vulcanized rubber in a subdivided form is of from 160% to 600%.

46. Process for manufacturing a thermoplastic elastomeric material according to claim 44 wherein the Degree of Grafting (% DG) of said vinyl polymer onto the surface of said vulcanized rubber in a subdivided form in of from 180% to 800%.

47. Process for manufacturing a thermoplastic elastomeric material according to any one of the preceding claims, wherein said vinyl polymer is grafted onto the surface of the vulcanized rubber in a subdivided form by means of a sulfur bridge.

48. Use of a thermoplastic elastomeric material according to any one of the preceding claims, as interface compatibilizing agent in blend with other polymers.

49. Use of a thermoplastic elastomeric material according to claim 48, wherein said other polymers are selected from: polystyrene, styrene-butadiens rubbers, polyphenylene ether resins, polycarbonates, Polyesters.

**Patentansprüche**

1. Verfahren zur Herstellung eines thermoplastischen, elastomeren Materials, wobei das Verfahren die folgenden Schritte umfasst:

- Oberflächenbehandeln eines vulkanisierten Gummis in unterteilter Form, unter Erhalt von Hydroxy- und/oder Mercaptogruppen auf seiner Oberfläche;
- Pfropfen von zumindest einem Vinylmonomer auf den oberflächenbehandelten, vulkanisierten Gummi in der Gegenwart von zumindest einem freien radikalischen Initiator unter Erhalt eines Vinylpolymers, das auf der Oberfläche des vulkanisierten Gummis in einer unterteilten Form gepfropft ist.

2. Verfahren zur Herstellung eines thermoplastischen, elastomeren Materials nach Anspruch 1, worin der vulkanisierte Gummi in einer unterteilten Form oberflächenbehandelt wird, unter Erhalt von Mercaptogruppen an seiner Oberfläche.

3. Verfahren zur Herstellung eines thermoplastischen, elastomeren Materials nach Anspruch 1 oder 2, worin die Pfropfeffizienz (Φ) des Vinylpolymers auf der Oberfläche des vulkanisierten Gummis nicht weniger als 40% ist.

4. Verfahren zur Herstellung eines thermoplastischen, elastomeren Materials nach Anspruch 3, worin die Pfropfeffizienz (Φ) des Vinylpolymers auf der Oberfläche des vulkanisierten Gummis von 45% bis 60% ist.

5. Verfahren zur Herstellung eines thermoplastischen, elastomeren Materials nach Anspruch 3, worin die Pfropfeffizienz (Φ) des Vinylpolymers auf der Oberfläche des vulkanisierten Gummis von 50% bis 80% ist.

6. Verfahren zur Herstellung eines thermoplastischen, elastomeren Materials nach einem der Ansprüche 1 bis 5, worin der vulkanisierte Gummi in einer unterteilten Form in der Form eines Pulvers oder Körnchen mit einer Teilchengröße von nicht mehr als 10 mm vorliegt.

7. Verfahren zur Herstellung eines thermoplastischen, elastomeren Materials nach einem der Ansprüche 1 bis 5, worin der vulkanisierte Gummi in einer unterteilten Form in der Form von Pulver oder Körnchen mit einer Teilchengröße von nicht mehr als 0,5 mm vorliegt.

8. Verfahren zur Herstellung eines thermoplastischen, elastomeren Materials nach Anspruch 7, worin der vulkanisierte Gummi in einer unterteilten Form in der Form von Pulvern oder Körnchen mit einer Teilchengröße von nicht mehr als 0,2 mm vorliegt.

9. Verfahren zur Herstellung eines thermoplastischen, elastomeren Materials nach Anspruch 8, worin der vulkanisierte Gummi in einer unterteilten Form in der Form von Pulvern oder Körnchen mit einer Teilchengröße von nicht mehr als 0,1 mm vorliegt.

10. Verfahren zur Herstellung eines thermoplastischen, elastomeren Materials nach einem der vorhergegangen Ansprüche, worin der vulkanisierte Gummi in einer unterteilten Form zumindest ein vernetztes elastomeres Dienpolymer oder -copolymer natürlichen Ursprungs oder erhalten durch Lösungspolymerisation, Emulsionspolymerisation oder Gasphasenpolymerisation von einem oder mehreren konjugierten Diolefinen, wahlweise vermischt mit zumindest einem Comonomer, ausgewählt aus Monovinylarenen und/oder polaren Comonomeren in einer Menge von nicht mehr als 60 Gew.-%.

11. Verfahren zur Herstellung eines thermoplastischen, elastomeren Materials nach Anspruch 10, worin das vernetzte elastomere Dienpolymer oder -copolymer ausgewählt ist aus: cis-1,4-Polyisopren, 3,4-Polyisopren, Polybutadien, wahlweise halogenierten Isopren/Isobuten-Copolymeren, 1,3-Butadien/Acrylnitril-Copolymeren, Styrol/1,3-Butadien-Copolymeren, Styrol/Isopren/1,3-Butadien-Copolymeren, Styrol/1,3-Butadien/Acrylnitril-Copolymeren oder Mischungen davon.

12. Verfahren zur Herstellung eines thermoplastischen, elastomeren Materials nach einem der vorhergehenden Ansprüche, worin der vulkanisierte Gummi in einer unterteilten Form weiterhin zumindest ein vernetztes elastomeres Polymer aus einem oder mehreren Monoolefinen mit einem olefinischen Copolymer oder Derivate davon umfasst.

13. Verfahren zur Herstellung eines thermoplastischen, elastomeren Materials nach Anspruch 12, worin das vernetzte elastomere Polymer ausgewählt ist aus Ethylen/Propylen-Copolymeren (EPR) oder Ethylen/Propylen/Dien-Copolymeren (EPDM), Polyisobuten, Butylgummis, Halobutylgummis, insbesondere Chlorbutyl- oder Brombutylgummis oder Mischungen davon.

14. Verfahren zur Herstellung eines thermoplastischen, elastomeren Materials nach einem der vorhergehenden Ansprüche, worin der Schritt der Oberflächenbehandlung eines vulkanisierten Gummis in unterteilter Form für den Erhalt von Hydroxygruppen auf der Oberfläche davon durchgeführt wird durch Dispergieren des vulkanisierten Gummis in einer unterteilten Form in einer Mischung, umfassend Wasser und ein organisches Lösungsmittel mit zumindest einem Oxidationsmittel.

15. Verfahren zur Herstellung eines thermoplastischen, elastomeren Materials nach Anspruch 14, worin das organische Lösungsmittel ausgewählt wird aus Ketonen wie Aceton, Alkoholen wie Ethanol, Methanol, Ethern wie Tetrahydrofuran, Dioxan oder Mischungen davon.

16. Verfahren zur Herstellung eines thermoplastischen, elastomeren Materials nach Anspruch 14 oder 15, worin das Oxidationsmittel ausgewählt ist aus Kaliumpermanganat, Wasserstoffperoxid, Osmiumtetraoxid, Wasserstoffperoxid/Harnstoff-Komplex, Natriumpercarbonat, Natriumperchlorat, Natriumperborat, Kaliumperoximonosulfat, Kaliumpermanganat/Kaliumperiodad-wässrige Lösung oder Mischungen davon.

17. Verfahren zur Herstellung eines thermoplastischen, elastomeren Materials nach einem der Ansprüche 14 bis 16, worin der Oberflächenbehandlungsschritt bei einer Temperatur von -15°C bis 50°C durchgeführt wird.

18. Verfahren zur Herstellung eines thermoplastischen, elastomeren Materials nach einem der Ansprüche 14 bis 17, worin der Oberflächenbehandlungsschritt für eine Zeit von 1 Stunde bis 48 Stunden durchgeführt wird.

19. Verfahren zur Herstellung eines thermoplastischen, elastomeren Materials nach einem der Ansprüche 14 bis 18, worin das Oxidationsmittel in einer Menge von 1 bis 50 Gew.-% in Bezug auf das Gesamtgewicht des vulkanisierten Gummis in einer unterteilten Form verwendet wird.

20. Verfahren zur Herstellung eines thermoplastischen, elastomeren Materials nach einem der vorhergehenden Ansprüche, worin der Oberflächenbehandlungsschritt durch Reaktion des oberflächenbehandelten vulkanisierten Gummis in einer unterteilten Form, erhalten gemäß einem der Ansprüche 14 bis 19, mit zumindest einem Silan-Kupplungsmittel durchgeführt wird, unter Erhalt von Mercaptogruppen auf dessen Oberfläche.

21. Verfahren zur Herstellung eines thermoplastischen, elastomeren Materials nach Anspruch 20, worin das Silan-Kupplungsmittel ausgewählt wird aus Verbindungen mit der folgenden Struktur (I):

$$(R)_3Si-C_nH_{2n}-SH \qquad (I)$$

worin die Gruppen R, die gleich oder verschieden sein können, ausgewählt sind aus Alkyl-, Alkoxy- oder Aryloxygruppen oder Halogenatomen, unter der Bedingung, dass zumindest eine der Gruppen R eine Alkoxy- oder Aryloxygruppe ist, n eine ganze Zahl von 1 bis 6 einschließlich ist.

22. Verfahren zur Herstellung eines thermoplastischen, elastomeren Materials nach Anspruch 20 oder 21, worin die Reaktion mit zumindest einem Kupplungsmittel bei einer Temperatur von -10°C bis 150°C durchgeführt wird.

23. Verfahren zur Herstellung eines thermoplastischen, elastomeren Materials nach einem der Ansprüche 20 bis 22, worin die Reaktion mit zumindest einem Kupplungsmittel für eine Zeit von 1 bis 48 Stunden durchgeführt wird.

24. Verfahren zur Herstellung eines thermoplastischen, elastomeren Materials nach einem der Ansprüche 20 bis 23, worin das Kupplungsmittel in einer Menge von 0,01 bis 10 Gew.-% in Bezug auf das Gesamtgewicht des oberflächenbehandelten, vulkanisierten Gummis verwendet wird.

25. Verfahren zur Herstellung eines thermoplastischen, elastomeren Materials nach einem der Ansprüche 1 bis 13, worin der Schritt der Oberflächenbehandlung eines vulkanisierten Gummis in einer unterteilten Form für den Erhalt von Mercaptogruppen auf dessen Oberfläche durch Reaktion desselben mit zumindest einer Thiosäure mit der folgenden strukturellen Formel (II) durchgeführt wird:

$$R_1-C(=O)-SH \qquad (II)$$

worin $R_1$ ausgewählt ist aus Alkyl-, Aryl-, Alkylaryl- oder Arylalkylgruppen in der Gegenwart von zumindest einem freien Radikalinitiator.

26. Verfahren zur Herstellung eines thermoplastischen, elastomeren Materials nach Anspruch 25, worin die Thiosäure in einer Menge von 0,01 bis 3 Gew.-% in Bezug auf das Gesamtgewicht des vulkanisierten Gummis in einer unterteilten Form verwendet wird.

27. Verfahren zur Herstellung eines thermoplastischen, elastomeren Materials nach Anspruch 25 oder 26, worin der freie Radikalinitiator ausgewählt wird aus Azoverbindungen mit der folgenden strukturellen Formel (III):

$$R_2\text{-}N\text{=}N\text{-}R_3 \qquad (III)$$

worin $R_2$ und $R_3$, die identisch oder verschieden sein können, ausgewählt sein können aus organischen Gruppen wie aliphatischen, cycloaliphatischen oder aromatischen Gruppen; oder linearen oder cyclischen Nitrilderivaten.

28. Verfahren zur Herstellung eines thermoplastischen, elastomeren Materials nach einem der Ansprüche 25 bis 27, worin der freie Radikalinitiator in einer Menge von 0,001 bis 10 Gew.-% in Bezug auf das Gesamtgewicht des vulkanisierten Gummis in einer unterteilten Form verwendet wird.

29. Verfahren zur Herstellung eines thermoplastischen, elastomeren Materials nach einem der Ansprüche 25 bis 28, worin die Reaktion mit zumindest einer Thiosäure und zumindest einem freien Radikalinitiator bei einer Temperatur von 0°C bis 150°C durchgeführt wird.

30. Verfahren zur Herstellung eines thermoplastischen, elastomeren Materials nach einem der Ansprüche 25 bis 29, worin die Reaktion mit zumindest einer Thiosäure und zumindest einem freien Radikalinitiator für eine Zeit von 1 bis 75 Stunden durchgeführt wird.

31. Verfahren zur Herstellung eines thermoplastischen, elastomeren Materials nach einem der vorhergehenden Ansprüche, worin das Vinylmonomer ausgewählt wird aus Alkylvinylmonomeren wie 2-Hydroxyethyl(meth)acrylat, 2-Hydroxypropyl(meth)acrylat, 2-Ethylhexyl(meth)acrylat, Butoxyethyl(meth)acrylat; cyclischen Vinylmonomeren wie Tetrahydrofurfuryl(meth)acrylat; linearen oder verzweigten Alkyl(meth)acrylaten wie Methyl(meth)acrylat, Ethyl(meth)acrylat, Butyl(meth)acrylat, Octyl(meth)acrylat, Decyl(meth)acrylat, Tridecyl(meth)acrylat, Stearyl(meth)acrylat), Lauryl(meth)acrylat, Isodecyl(meth)acrylat, n-Hexyl(meth)acrylat; cyclischen (Meth)acrylaten wie Cyclohexyl(meth)acrylat, Isobornyl(meth)acrylat, ethoxylierten Alkyl(meth)acrylaten wie Methoxyethyl(meth)acrylat, Ethoxyethyl(meth)acrylat, Butoxyethyl(meth)acrylat, 2-(2-Ethoxy)ethyl(meth)acrylat, Dicyclopentenyl(meth)acrylat, Diethylenglycol(meth)acrylat, Ethoxydiethylenglycol(meth)acrylat, Benzyl(meth)acrylat, Polyethylenglycol(meth)acrylat, Polypropylenglycol(meth)acrylat, Methoxypolyethylenglycol(meth)acrylat, Methoxypolypropylenglycol(meth)acrylat, 2-Phenoxyethyl(meth)acrylat, Phenoxypolyethylenglycol(meth)acrylat, Alkylphenoxyethyl(meth)acrylat wie Nonylphenoxyethyl(meth)acrylat, Alkylphenoxypolyalkylenglycol(meth)acrylat, 2-Hydroxy-3-phenyloxypropyl(meth)acrylat, Tetrahydrofurfuryloxypropylalkylenglycol(meth)acrylat, Dicyclopentenyloxypolyalkylenglycol(meth)acrylat, Polyfluoroalkyl(meth)acrylat, oder Mischungen davon; oder aus aromatischen Vinylmonomeren wie Styrol; o-Methylstyrol, m-Methylstyrol, p-Methylstyrol, 2,4-Dimethylstyrol, Ethylstyrol, p-t-Butylstyrol, $\alpha$-Methylstyrol, $\alpha$-Methyl-p-methylstyrol, o-Chlorstyrol, m-Chlorstyrol, p-Chlorstyrol, p-Bromstyrol, 2-Methyl-1,4-dichlorostyrol, 2,4-Dibromstyrol, Vinylnaphthalin, oder Mischungen davon oder Derivaten davon, umfassend Styrolmonomere mit einem copolymerisierbaren Monomer als Substituent wie zum Beispiel Acrylnitril, Maleinanhydrid, Methylmethacrylat, Vinylacetat, Divinylbenzol oder Mischungen davon.

32. Verfahren zur Herstellung eines thermoplastischen, elastomeren Materials nach Anspruch 31, worin das Vinylmonomer ausgewählt wird aus Methyl(meth)acrylat und Styrolmonomeren.

33. Verfahren zur Herstellung eines thermoplastischen, elastomeren Materials nach Anspruch 32, worin das Vinylmonomer Styrol ist.

34. Verfahren zur Herstellung eines thermoplastischen, elastomeren Materials nach einem der vorhergehenden Ansprüche, worin das Vinylmonomer in einer Menge von 0,1 bis 99 Gew.-% in Bezug auf das Gesamtgewicht des oberflächenbehandelten, vulkanisierten Gummis in einer unterteilten Form und des Vinylmonomers verwendet wird.

35. Verfahren zur Herstellung eines thermoplastischen, elastomeren Materials nach einem der vorhergehenden Ansprüche, worin der Pfropfschritt in der Gegenwart von zumindest einem freien Radikalinitiator durchgeführt wird, ausgewählt aus Peroxidverbindungen, Azoverbindungen oder Mischungen davon.

36. Verfahren zur Herstellung eines thermoplastischen, elastomeren Materials nach Anspruch 35, worin der freie Radikalinitiator in einer Menge von 0,001 bis 5 Mol-% in Bezug auf die Gesamtmole des Vinylmonomers verwendet wird.

37. Verfahren zur Herstellung eines thermoplastischen, elastomeren Materials nach einem der vorhergehenden Ansprüche, worin der Pfropfschritt bei einer Temperatur von 0°C bis 150°C durchgeführt wird.

**38.** Verfahren zur Herstellung eines thermoplastischen, elastomeren Materials nach einem der vorhergehenden Ansprüche, worin der Pfropfschritt für eine Zeit von 1 bis 48 Stunden durchgeführt wird.

**39.** Verfahren zur Herstellung eines thermoplastischen, elastomeren Materials nach einem der vorhergehenden Ansprüche, worin das Vinylmonomer in einem inerten Lösungsmittel aufgelöst wird, ausgewählt aus aromatischen Kohlenwasserstoffen, alicyclischen Kohlenwasserstoffen, aliphatischen Kohlenwasserstoffen, Ketonen, Estern, Ethan oder Mischungen davon.

**40.** Verfahren zur Herstellung eines thermoplastischen, elastomeren Materials nach Anspruch 39, worin das inerte Lösungsmittel in einer Menge von 0 bis 30 Gew.-% in Bezug auf das Gesamtgewicht des Vinylmonomers verwendet wird.

**41.** Verfahren zur Herstellung eines thermoplastischen, elastomeren Materials nach einem der vorhergehenden Ansprüche, worin das Vinylmonomer auf die Oberfläche des vulkanisierten Gummis in einer unterteilten Form in einer Menge von nicht weniger als 60 Gew.-% in Bezug auf das Gesamtgewicht des oberflächengepfropften Vinylmonomers und des vulkanisierten Gummis in einer unterteilten Form gepfropft wird.

**42.** Verfahren zur Herstellung eines thermoplastischen, elastomeren Materials nach Anspruch 41, worin das Vinylmonomer auf die Oberfläche des vulkanisierten Gummis in einer unterteilten Form in einer Menge von nicht weniger als 70 Gew.-% in Bezug auf das Gesamtgewicht des oberflächengepfropften Vinylpolymers und des vulkanisierten Gummis in einer unterteilten Form gepfropft wird.

**43.** Verfahren zur Herstellung eines thermoplastischen, elastomeren Materials nach Anspruch 42, worin das Vinylpolymer auf die Oberfläche des vulkanisierten Gummis in einer unterteilten Form in einer Menge von nicht weniger als 80 Gew.-% in Bezug auf das Gesamtgewicht des oberflächengepfropften Vinylpolymers und des vulkanisierten Gummis in einer unterteilten Form gepfropft wird.

**44.** Verfahren zur Herstellung eines thermoplastischen, elastomeren Materials nach einem der vorhergehenden Ansprüche, worin der Pfropfgrad (% DG) des Vinylpolymers auf die Oberfläche des vulkanisierten Gummis in einer unterteilten Form nicht weniger als 150% ist.

**45.** Verfahren zur Herstellung eines thermoplastischen, elastomeren Materials nach Anspruch 44, worin der Pfropfgrad (% DG) des Vinylpolymers auf die Oberfläche des vulkanisierten Gummis in einer unterteilten Form von 160 bis 600% ist.

**46.** Verfahren zur Herstellung eines thermoplastischen, elastomeren Materials nach Anspruch 44, worin der Pfropfgrad (% DG) des Vinylpolymers auf die Oberfläche des vulkanisierten Gummis in einer unterteilten Form von 180 bis 800% ist.

**47.** Verfahren zur Herstellung eines thermoplastischen, elastomeren Materials nach einem der vorhergehenden Ansprüche, worin das Vinylpolymer auf die Oberfläche des vulkanisierten Gummis in einer unterteilten Form mit Hilfe einer Schwefelbrücke gepfropft wird.

**48.** Verwendung eines thermoplastischen, elastomeren Materials nach einem der vorhergehenden Ansprüche, als Grenzflächen-Kompatibilisierungsmittel in Mischung mit anderen Polymeren.

**49.** Verwendung eines thermoplastischen, elastomeren Materials nach Anspruch 48, worin die anderen Polymere ausgewählt sind aus Polystyrol, Styrol-Butadien-Gummis, Polyphenylenetherharzen, Polycarbonaten, Polyestern.

**Revendications**

**1.** Procédé de fabrication d'un matériau élastomère thermoplastique, lequel procédé comporte les étapes suivantes :

- traiter en surface un caoutchouc vulcanisé, à l'état subdivisé, de manière à former sur sa surface des groupes hydroxyle et/ou sulfanyle ;
- greffer au moins un monomère vinylique sur ce caoutchouc vulcanisé traité en surface, en présence d'au moins un amorceur formant des radicaux, de manière à obtenir un polymère polyvinylique greffé sur la surface dudit caoutchouc vulcanisé subdivisé.

2. Procédé de fabrication d'un matériau élastomère thermoplastique, conforme à la revendication 1, dans lequel on traite en surface ledit caoutchouc vulcanisé, à l'état subdivisé, de manière à former sur sa surface des groupes sulfanyle.

3. Procédé de fabrication d'un matériau élastomère thermoplastique, conforme à la revendication 1 ou 2, dans lequel le taux de greffage effectif Φ dudit polymère polyvinylique sur la surface dudit caoutchouc vulcanisé vaut au moins 40 %.

4. Procédé de fabrication d'un matériau élastomère thermoplastique, conforme à la revendication 3, dans lequel le taux de greffage effectif Φ dudit polymère polyvinylique sur la surface dudit caoutchouc vulcanisé vaut de 45 à 60 %.

5. Procédé de fabrication d'un matériau élastomère thermoplastique, conforme à la revendication 3, dans lequel le taux de greffage effectif Φ dudit polymère polyvinylique sur la surface dudit caoutchouc vulcanisé vaut de 50 à 80 %.

6. Procédé de fabrication d'un matériau élastomère thermoplastique, conforme à l'une des revendications 1 à 5, dans lequel le caoutchouc vulcanisé subdivisé se présente sous la forme d'une poudre ou d'un granulat dont les particules ont une taille d'au plus 10 mm.

7. Procédé de fabrication d'un matériau élastomère thermoplastique, conforme à l'une des revendications 1 à 5, dans lequel le caoutchouc vulcanisé subdivisé se présente sous la forme d'une poudre ou d'un granulat dont les particules ont une taille d'au plus 0,5 mm.

8. Procédé de fabrication d'un matériau élastomère thermoplastique, conforme à la revendication 7, dans lequel le caoutchouc vulcanisé subdivisé se présente sous la forme d'une poudre ou d'un granulat dont les particules ont une taille d'au plus 0,2 mm.

9. Procédé de fabrication d'un matériau élastomère thermoplastique, conforme à la revendication 8, dans lequel le caoutchouc vulcanisé subdivisé se présente sous la forme d'une poudre ou d'un granulat dont les particules ont une taille d'au plus 0,1 mm.

10. Procédé de fabrication d'un matériau élastomère thermoplastique, conforme à l'une des revendications précédentes, dans lequel le caoutchouc vulcanisé subdivisé comprend au moins un élastomère polymère ou copolymère de diène réticulé, d'origine naturelle ou obtenu par polymérisation, en solution, en émulsion ou en phase gazeuse, d'une ou de plusieurs dioléfine(s) conjuguée(s), mélangée(s) en option avec au moins un comono-mère, choisi parmi les monovinyl-arènes et/ou les comonomères polaires et employé en une proportion pondérale d'au plus 60 %.

11. Procédé de fabrication d'un matériau élastomère thermoplastique, conforme à la revendication 10, dans lequel l'élastomère polymère ou copolymère de diène réticulé est choisi parmi les suivants : cis-1,4-polyisoprène, 3,4-polyisoprène, polybutadiène, copolymères d'isoprène et d'isobutène, éventuellement halogénés, copolymères de 1,3-butadiène et d'acrylonitrile, copolymères de styrène et de 1,3-butadiène, copolymères de styrène, d'isoprène et de 1,3-butadiène, et copolymères de styrène, de 1,3-butadiène et d'acrylonitrile, ainsi que leurs mélanges.

12. Procédé de fabrication d'un matériau élastomère thermoplastique, conforme à l'une des revendications précédentes, dans lequel le caoutchouc vulcanisé subdivisé comprend en outre au moins un polymère élastomère réticulé, formé d'une ou de plusieurs monooléfine(s) et d'un comonomère oléfinique, ou un dérivé d'un tel polymère.

13. Procédé de fabrication d'un matériau élastomère thermoplastique, conforme à la revendication 12, dans lequel le polymère élastomère réticulé est choisi parmi les suivants : copolymères d'éthylène et de propylène (EPR), copolymères d'éthylène, de propylène et de diène (EPDM), polyisobutène, caoutchoucs butyl, et caoutchoucs butyl halogénés, en particulier les caoutchoucs butyl chlorés ou bromés, ainsi que les mélanges de tels polymères.

14. Procédé de fabrication d'un matériau élastomère thermoplastique, conforme à l'une des revendications précédentes, dans lequel on effectue l'étape consistant à traiter en surface un caoutchouc vulcanisé, à l'état subdivisé, de manière à former sur sa surface des groupes hydroxyle, en dispersant ce caoutchouc vulcanisé subdivisé dans un mélange comprenant de l'eau et un solvant organique, ainsi qu'au moins un agent oxydant.

**15.** Procédé de fabrication d'un matériau élastomère thermoplastique, conforme à la revendication 14, dans lequel le solvant organique est choisi parmi des cétones comme l'acétone, des alcools comme l'éthanol ou le méthanol, des éthers comme le tétrahydrofurane et le dioxane, et les mélanges de tels solvants.

**16.** Procédé de fabrication d'un matériau élastomère thermoplastique, conforme à la revendication 14 ou 15, dans lequel l'agent oxydant est choisi parmi les suivants : permanganate de potassium, peroxyde d'hydrogène, tétroxyde d'osmium, complexe d'urée et de peroxyde d'hydrogène, percarbonate de sodium, perchlorate de sodium, perborate de sodium, peroxomonosulfate de potassium, permanganate de potassium et periodate de potassium en solution aqueuse, et leurs mélanges.

**17.** Procédé de fabrication d'un matériau élastomère thermoplastique, conforme à l'une des revendications 14 à 16, dans lequel on effectue ladite étape de traitement de surface à une température de -15 à 50 °C.

**18.** Procédé de fabrication d'un matériau élastomère thermoplastique, conforme à l'une des revendications 14 à 17, dans lequel ladite étape de traitement de surface dure 1 à 48 heures.

**19.** Procédé de fabrication d'un matériau élastomère thermoplastique, conforme à l'une des revendications 14 à 18, dans lequel on emploie l'agent oxydant en une quantité qui représente 1 à 50 % du poids total du caoutchouc vulcanisé subdivisé.

**20.** Procédé de fabrication d'un matériau élastomère thermoplastique, conforme à l'une des revendications précédentes, dans lequel on effectue l'étape de traitement de surface en faisant réagir un caoutchouc vulcanisé subdivisé traité en surface, obtenu conformément à l'une des revendications 14 à 19, avec au moins un agent de couplage de type silane, de manière à former sur sa surface des groupes sulfanyle.

**21.** Procédé de fabrication d'un matériau élastomère thermoplastique, conforme à la revendication 20, dans lequel l'agent de couplage de type silane est choisi parmi les composés présentant la formule structurale (I) suivante :

$$(R)_3Si\text{-}CnH_2n\text{-}SH \qquad (I)$$

dans laquelle les entités représentées par R, qui peuvent être identiques ou différentes, sont choisies parmi les atomes d'halogène et les groupes alkyle, alcoxy et aryloxy, sous réserve qu'au moins l'une de ces entités R soit un groupe alcoxy ou aryloxy, et l'indice n est un nombre entier qui vaut de 1 à 6, bornes incluses.

**22.** Procédé de fabrication d'un matériau élastomère thermoplastique, conforme à la revendication 20 ou 21, dans lequel on effectue la réaction avec ledit agent de couplage au nombre d'au moins un à une température de -10 à 150 °C.

**23.** Procédé de fabrication d'un matériau élastomère thermoplastique, conforme à l'une des revendications 20 à 22, dans lequel la réaction avec l'agent de couplage au nombre d'au moins un dure 1 à 48 heures.

**24.** Procédé de fabrication d'un matériau élastomère thermoplastique, conforme à l'une des revendications 20 à 23, dans lequel on emploie l'agent de couplage en une quantité qui représente 0,01 à 10 % du poids total du caoutchouc vulcanisé traité en surface.

**25.** Procédé de fabrication d'un matériau élastomère thermoplastique, conforme à l'une des revendications 1 à 13, dans lequel on effectue l'étape consistant à traiter en surface un caoutchouc vulcanisé, à l'état subdivisé, de manière à former sur sa surface des groupes sulfanyle, en faisant réagir ce caoutchouc avec au moins un thioacide présentant la formule structurale (II) suivante :

$$R_1\text{-}C(=O)\text{-}SH \qquad (II)$$

dans laquelle $R_1$ représente une entité choisie parmi les groupes alkyle, aryle, alkyl-aryle et aryl-alkyle, en présence d'au moins un amorceur formant des radicaux.

**26.** Procédé de fabrication d'un matériau élastomère thermoplastique, conforme à la revendication 25, dans lequel on emploie le thioacide en une quantité qui représente 0,01 à 3 % du poids total du caoutchouc vulcanisé subdivisé.

**27.** Procédé de fabrication d'un matériau élastomère thermoplastique, conforme à la revendication 25 ou 26, dans lequel l'amorceur formant des radicaux est choisi parmi les composés azoïques présentant la formule structurale (III) suivante :

$$R_2\text{-}N\text{=}N\text{-}R_3 \qquad (III)$$

dans laquelle $R_2$ et $R_3$ représentent des entités qui peuvent être identiques ou différentes et qui sont choisies parmi les groupes organiques comme les groupes aliphatiques, cycloaliphatiques ou aromatiques, et leurs dérivés de type nitrile à chaîne linéaire ou cyclique.

**28.** Procédé de fabrication d'un matériau élastomère thermoplastique, conforme à l'une des revendications 25 à 27, dans lequel on emploie l'amorceur formant des radicaux en une quantité qui représente 0,001 à 10 % du poids total du caoutchouc vulcanisé subdivisé.

**29.** Procédé de fabrication d'un matériau élastomère thermoplastique, conforme à l'une des revendications 25 à 28, dans lequel on effectue la réaction avec le thioacide au nombre d'au moins un et l'amorceur formant des radicaux, au nombre d'au moins un, à une température de 0 à 150 °C.

**30.** Procédé de fabrication d'un matériau élastomère thermoplastique, conforme à l'une des revendications 25 à 29, dans lequel la réaction avec le thioacide au nombre d'au moins un et l'amorceur formant des radicaux, au nombre d'au moins un, dure 1 à 75 heures.

**31.** Procédé de fabrication d'un matériau élastomère thermoplastique, conforme à l'une des revendications précédentes, pour lequel le monomère vinylique est choisi parmi les suivants : monomères vinyliques alkyliques, tels les acrylate ou méthacrylate de 2-hydroxy-éthyle, acrylate ou méthacrylate de 2-hydroxy-propyle, et acrylate ou méthacrylate de butoxyéthyle ; monomères vinyliques cycliques, tel l'acrylate ou le méthacrylate de tétrahydrofurfuryle ; acrylates et méthacrylates d'alkyle linéaire ou ramifié, tels les acrylate ou méthacrylate de méthyle, acrylate ou méthacrylate d'éthyle, acrylate ou méthacrylate de butyle, acrylate ou méthacrylate d'octyle, acrylate ou méthacrylate de décyle, acrylate ou méthacrylate de tridécyle, acrylate ou méthacrylate de stéaryle, acrylate ou méthacrylate de lauryle, acrylate ou méthacrylate d'isodécyle et acrylate ou méthacrylate de n-hexyle ; acrylates et méthacrylates cycliques, tels les acrylate ou méthacrylate de cyclohexyle et acrylate ou méthacrylate d'isobornyle ; acrylates et méthacrylates d'alkyle éthoxylés, tels les acrylate ou méthacrylate de méthoxyéthyle, acrylate ou méthacrylate d'éthoxyéthyle, acrylate ou méthacrylate de butoxyéthyle, et acrylate ou méthacrylate de 2-(2-éthoxy)éthyle ; acrylate ou méthacrylate de dicyclopentényle, acrylate ou méthacrylate de diéthylèneglycol, acrylate ou méthacrylate d'éthoxy-diéthylèneglycol, acrylate ou méthacrylate de benzyle, acrylate ou méthacrylate de polyéthylèneglycol, acrylate ou méthacrylate de polypropylèneglycol, acrylate ou méthacrylate de méthoxy-polyéthylèneglycol, acrylate ou méthacrylate de méthoxy-polypropylèneglycol, acrylate ou méthacrylate de 2-phénoxy-éthyle, acrylate ou méthacrylate de phénoxy-polyéthylèneglycol ; acrylates et méthacrylates d'alkyl-phénoxy-éthyle, tel l'acrylate ou méthacrylate de nonylphénoxy-éthyle ; acrylates et méthacrylates d'alkyl-phénoxy-polyéthylèneglycol ; acrylate ou méthacrylate de 2-hydroxy-3-phénoxy-propyle ; acrylates et méthacrylates de tétrahydrofurfuryloxy-propyl-alkylèneglycol, acrylates et méthacrylates de dicyclopentényloxy-polyalkylène-glycol, acrylates et méthacrylates de polyfluoroalkyle ; leurs mélanges ; monomères vinyliques aromatiques, tels les styrène, ortho-méthyl-styrène, méta-méthyl-styrène, para-méthyl-styrène, 2,4-diméthyl-styrène, éthyl-styrène, para-tertiobutyl-styrène, alpha-méthyl-styrène, alpha-méthyl-para-méthyl-styrène, ortho-chloro-styrène, méta-chloro-styrène, para-chloro-styrène, para-bromostyrène, 2-méthyl-1,4-dichloro-styrène, 2,4-dibromo-styrène, vinyl-naphtalène, ainsi que leurs mélanges ; et leurs dérivés, y compris les monomères de type styrène contenant, à titre de remplaçant, un monomère copolymérisable, comme par exemple de l'acrylonitrile, de l'anhydride maléique, du méthacrylate de méthyle, de l'acétate de vinyle ou du divinyl-benzène, ou un mélange de tels monomères.

**32.** Procédé de fabrication d'un matériau élastomère thermoplastique, conforme à la revendication 31, dans lequel ledit monomère vinylique est choisi parmi l'acrylate de méthyle, le méthacrylate de méthyle et les monomères de type styrène.

**33.** Procédé de fabrication d'un matériau élastomère thermoplastique, conforme à la revendication 32, dans lequel ledit monomère vinylique est du styrène.

**34.** Procédé de fabrication d'un matériau élastomère thermoplastique, conforme à l'une des revendications précédentes, dans lequel on utilise le monomère vinylique en une quantité qui représente 0,1 à 99 % du poids total du caoutchouc vulcanisé subdivisé et traité en surface et du monomère vinylique.

35. Procédé de fabrication d'un matériau élastomère thermoplastique, conforme à l'une des revendications précédentes, dans lequel on réalise l'étape de greffage en présence d'au moins un amorcceur formant des radicaux, choisi parmi les composés de type peroxyde, les composés azoïques et les mélanges de tels composés.

36. Procédé de fabrication d'un matériau élastomère thermoplastique, conforme à la revendication 35, dans lequel on emploie l'amorceur formant des radicaux en une quantité qui représente 0,001 à 5 % du nombre total de moles de monomère vinylique.

37. Procédé de fabrication d'un matériau élastomère thermoplastique, conforme à l'une des revendications précédentes, dans lequel on réalise ladite étape de greffage à une température de 0 à 150 °C.

38. Procédé de fabrication d'un matériau élastomère thermoplastique, conforme à l'une des revendications précédentes, dans lequel ladite étape de greffage dure 1 à 48 heures.

39. Procédé de fabrication d'un matériau élastomère thermoplastique, conforme à l'une des revendications précédentes, pour lequel le monomère vinylique est dissous dans un solvant inerte choisi parmi les hydrocarbures aromatiques, hydrocarbures alicycliques, hydrocarbures aliphatiques, cétones, esters et éthers, ainsi que les mélanges de tels composés.

40. Procédé de fabrication d'un matériau élastomère thermoplastique, conforme à la revendication 39, dans lequel on emploie ledit solvant inerte en une quantité qui représente 0 à 30 % du poids total de monomère vinylique.

41. Procédé de fabrication d'un matériau élastomère thermoplastique, conforme à l'une des revendications précédentes, dans lequel ledit polymère polyvinylique se trouve greffé sur la surface dudit caoutchouc vulcanisé subdivisé en une quantité qui représente au moins 60 % du poids total du caoutchouc vulcanisé subdivisé et du polymère polyvinylique greffé sur la surface de celui-ci.

42. Procédé de fabrication d'un matériau élastomère thermoplastique, conforme à la revendication 41, dans lequel ledit polymère polyvinylique se trouve greffé sur la surface dudit caoutchouc vulcanisé subdivisé en une quantité qui représente au moins 70 % du poids total du caoutchouc vulcanisé subdivisé et du polymère polyvinylique greffé sur la surface de celui-ci.

43. Procédé de fabrication d'un matériau élastomère thermoplastique, conforme à la revendication 42, dans lequel ledit polymère polyvinylique se trouve greffé sur la surface dudit caoutchouc vulcanisé subdivisé en une quantité qui représente au moins 80 % du poids total du caoutchouc vulcanisé subdivisé et du polymère polyvinylique greffé sur la surface de celui-ci.

44. Procédé de fabrication d'un matériau élastomère thermoplastique, conforme à l'une des revendications précédentes, dans lequel le degré de greffage DG dudit polymère polyvinylique sur la surface dudit caoutchouc vulcanisé subdivisé vaut au moins 150 %.

45. Procédé de fabrication d'un matériau élastomère thermoplastique, conforme à la revendication 44, dans lequel le degré de greffage DG dudit polymère polyvinylique sur la surface dudit caoutchouc vulcanisé subdivisé vaut de 160 à 600 %.

46. Procédé de fabrication d'un matériau élastomère thermoplastique, conforme à la revendication 44, dans lequel le degré de greffage DG dudit polymère polyvinylique sur la surface dudit caoutchouc vulcanisé subdivisé vaut de 180 à 800 %.

47. Procédé de fabrication d'un matériau élastomère thermoplastique, conforme à l'une des revendications précédentes, dans lequel c'est par l'intermédiaire de ponts formés d'atomes de soufre que ledit polymère polyvinylique se trouve greffé sur la surface du caoutchouc vulcanisé subdivisé.

48. Emploi d'un matériau élastomère thermoplastique, conforme à l'une des revendications précédentes, comme agent interfacial de compatibilisation au sein d'un mélange formé avec d'autres polymères.

**49.** Emploi d'un matériau élastomère thermoplastique, conforme à la revendication 48, pour lequel lesdits autres polymères sont choisis parmi les suivants : polystyrène, caoutchoucs à base de styrène et de butadiène, résines de poly(phénylène éther), polycarbonates et polyesters.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 304263 A
- GB 2022105 A

**Non-patent literature cited in the description**

- **D. TUCHMAN ; S. L. ROSEN.** *Journal of Elastomers and Plastics,* 1978, vol. 10, 115-128
- **M. PITTOLO ; R. P. BURFORD.** *Journal of Material Science,* 1986, vol. 21, 1769-1774
- **M. PITTOLO ; R. P. BURFORD.** *Rubber Chemistry and Technology,* 1986, vol. 58, 97-106
- **S. COIAI et al.** *Macromolecules 2003,* 06 October 2003
- **M. PITTOLO ; R. P. BURFORD.** *Rubber Chemistry and Technology*